# EUROPEAN PATENT APPLICATION

(11) **EP 1 923 107 A1**
(43) Date of publication of application: **21.05.2008**
(21) Application number: 06023814.4
(22) Date of filing: 16.11.2006
(51) Int. Cl.: A63F 13/08, A47C 1/024

(54) **Control device for a compter game**

(71) Applicant: Smit, Fernando, 7005 BS Doetinchem (NL)
(72) Inventor: Smit, Fernando, 7005 BS Doetinchem (NL)
(74) Representative: Baeten, Ernest

(57) **Abstract**

The present invention relates to a control device for a computer game, comprising at least one control module for controlling a computer simulation programme and a seat unit comprising a supporting frame and a seat part that can be positioned in such a manner with respect to said at least one control module that a user can sit down on the seat unit for operating said at least one control module from the seat unit, characterised in that the seat part of the seat unit can be fixed in at least two positions with respect to said at least one control module, wherein a first position enables the user to take up a more reclined position with respect to said at least one control module than in a second position different from said first position.

## Description

The present invention relates to a control device for a computer game, comprising at least one control module for controlling a computer simulation programme and a seat unit comprising a supporting frame and a seat part that can be positioned in such a manner with respect to said at least one control module that a user can sit down on the seat unit for operating said at least one control module from the seat unit.

Such a device is known from WO2005/105246, which discloses a control device for a computer simulator programme, comprising a control module and a seat connected thereto, which seat comprises a lower part that functions as a supporting frame to which a seat part is connected. The back support of the seat can be placed in two positions with respect to the seat so as to be able to transport the control device in a condition that is more compact than the condition of use. The present inventor considers the fact that the known control device has not been prepared for playing different computer simulation programmes that require different positions of a user to be a drawback. When racing with a race car is simulated, for example, a more reclined position is required than in the situation in which driving a rally car is simulated, but of course there are also other computer games which require specific positions.

The object of the present invention is therefore to provide a control device as referred to in the introduction that is suitable for playing different computer simulation programmes that can support different positions of a user. This object is accomplished by the present invention in that the seat part of the seat unit can be fixed in at least two positions with respect to said at least one control module, wherein a first position enables the user to take up a more reclined position with respect to said at least one control module than in a second position different from said first position. Thus it is possible to fix the seat unit in at least two mutually different positions with respect to the control device. The object of the present invention is achieved in this way.

Although control devices for playing a computer game are known in which the seat unit is movable with respect to a control module, the known devices provide different possibilities of movement that meet different requirements. Thus, the seat unit is known to be movable over guides so as to adapt the spacing between the seat part and the control module to the length of a user('s legs). The seat unit may be locked in position on the guides at various distances from the control module. The object and the effect of this arrangement are not the same as the object and the effect, respectively, of the present invention, however. Another known device in which a seat part is movable with respect to a frame of the control module of a computer simulation programme is a device in which the seat part moves with respect to the supporting frame in dependence on a simulated situation of the simulation programme. An example of this is a flight simulator for an aeroplane. In said device, the position of the seat part with respect to the control module remains unchanged, however, i.e. the control module follows the movements of the seat part. Furthermore, the seat part of said device cannot be fixed in various positions, but the intention is rather to enable movement of the seat part during the game. Also in the case of this known device, the object, the effect as well as the features are different from those of the present invention, therefore.

In a preferred embodiment of the present invention, a tilting mechanism is provided for tilting the seat part of the seat unit between said at least two positions. The tilting mechanism enables easy tilting of the seat part to the front and to the rear between a comparatively upright position and a comparatively reclined position, respectively.

It is preferable in that connection if the seat part of the seat unit is connected to the supporting frame of the seat unit via the tilting mechanism. This makes it possible to maintain the supporting frame in the position in which it is supported on a supporting surface, whilst the seat part can be tilted with respect to the supporting frame. In this embodiment it is possible to integrate the tilting means in the connecting means, for example a pivotable connecting pin, between the seat part and the supporting frame.

In an alternative embodiment of the present invention, the tilting mechanism is provided on the frame for tilting a first frame part, which supports the seat part, with respect to a second frame part, which is supported on a supporting surface. The seat part may be immovably fixed to the first frame part in that case.

Preferably, locking means are provided for locking the seat part in said at least two positions. By fixing the seat part in the desired position of said at least two positions, using locking means, a stable seated position for playing a computer game in question is provided in the desired position.

In order to be able to determine and/or fix a desired spacing between the seat unit and the control module, connecting means are preferably provided for connecting the control module to the seat unit. Said connecting means may be provided with adjusting means for adjustably connecting the seat unit to the control unit, for example in dependence on the desired spacing between a specific player and the control module. Using the (adjustable) connecting means, it is possible to adjust the position of a player with respect to the control means.

The control device preferably comprises a screen for visualising the computer game. Since the screen forms part of the control device, an integrated unit consisting of the control module, the screen and possibly the seat part is formed. This is advantageous, because this enables a player who is seated in the seat part to respond to situations being depicted of the screen via the control module.

In a preferred embodiment of the present invention, the control device comprises at least one pedal and a steering wheel for simulating the driving of a vehicle. This renders the device excellently suitable for playing a computer game in which the driving of the vehicle is to be simulated. The term "game" as used herein is to be understood to include a more serious situation as well, for example learning to drive a vehicle or training practical situations.

It is preferable in that connection if the computer simulation programme comprises software for simulating the driving of a car.

In a preferred embodiment of the present invention, the seat part comprises a so-called bucket seat, which can be placed at least in a so-called rally position and in a so-called race position. Many computer games simulate driving a car over a circuit, in particular realising the shortest possible lap time. In practice, drivers of a so-called rally car take up an essentially "normal" position for driving a car. Race car drivers as a rule take up a more "reclined" position than rally car drivers. In order to be able to use the control device for playing rally games as well as race games, the bucket seat is tiltable.

In a preferred embodiment of the present invention, a steering wheel which is adjustably connected to the supporting frame via adjusting means is provided. Not only does this enable a user to put the steering wheel in a desired position in one of said at least two positions of the seat part of the seat unit but the adjustability of the steering wheel also enables the user to adjust the position of the steering wheel in dependence on the position of the seat part. If the steering wheel were to be connected to the supporting frame in such a manner that its position will not change automatically when the seat part is put in a different position, a user would be seated closer to the steering wheel in the comparatively upright position than in the comparatively reclined position. The adjustability of the steering wheel solves this problem. It is, incidentally, also possible to connect the steering wheel to, for example, the seat unit in such a manner that the position of the steering wheel will be changed automatically upon adjustment of the position of the seat unit. In that case it is also desirable to be able to adjust the position of the steering wheel to a user's personal requirements.

To maintain the position of the steering wheel while playing the computer game it is preferable if said adjusting means comprise a locking element for locking the steering-mechanism in a set position with respect to the seat unit.

It is furthermore preferable if said at least one control module comprises at least one foot pedal and if the spacing between the seat unit and said at least one foot pedal is adjustable. That which has been discussed with regard to the steering wheel in the preceding paragraphs also applies to said at least one foot pedal, viz. that the spacing thereof with respect to the seat part can be influenced by changing the position of the seat part and that preferably adjustment according to a user's requirements is possible.

It is preferable in that connection if said at least one foot pedal is connected to the seat unit via the supporting frame, and that an adjusting element and a locking element are provided for adjusting the spacing between said seat unit and said at least one foot pedal and locking said seat unit and said at least one foot pedal in the position as adjusted. This, too, enables a user to fix the adjusted position in question, so that it can be ensured that the spacing between the user and said at least one foot pedal will remain unchanged while the user is playing a game.

An adjusting element and a locking element may be used if, as described in the preceding paragraph, the seat unit and the at least one control module are interconnected, but also if they are not interconnected and the seat unit and/or the at least one control module is (are) separately fixed, adjustably or non-adjustably, to a supporting surface.

Preferably, adjusting means and a locking element are provided for adjusting the position of the screen with respect to a user and locking the screen in the adjusted position. In this case too, adjusting means may be provided for changing the adjustment of the screen in case of a change in the position of the seat unit and/or for adjusting the position as desired by a user.

The present invention will now be explained in more detail with reference to the appended drawings, in which:
Figure 1 is a perspective sectional view of a control device according to the present invention;
Figures 2a and 2b schematically show two different positions of the control device of figure 1; and
Figure 3 is a bottom view of the control device of figure 2a.

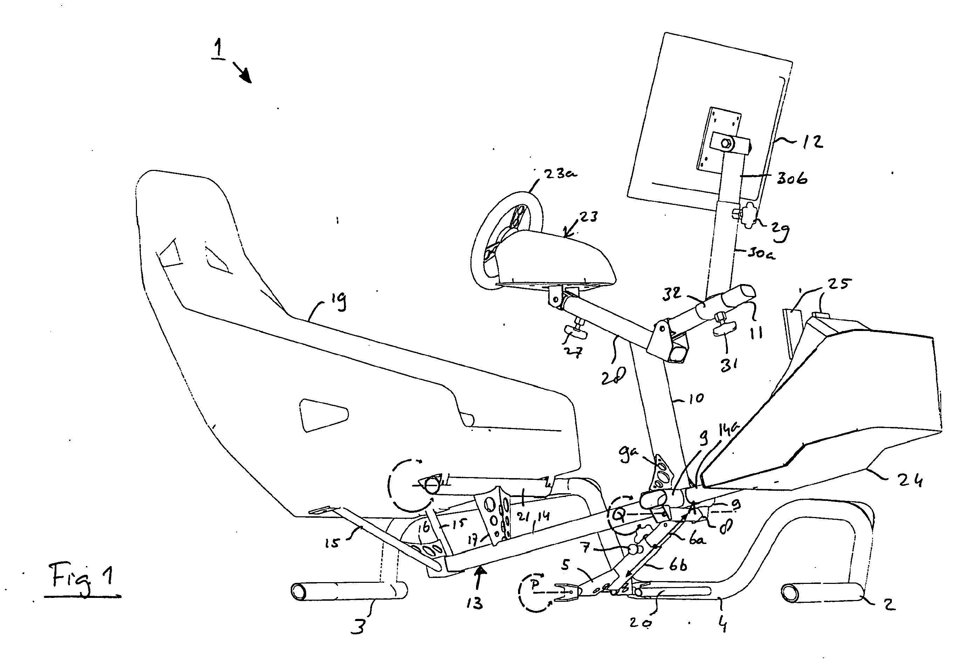

Referring to figure 1, there is shown a control device 1 for a computer game that comprises a tubular frame with a front leg 2, a rear leg 3 and a central supporting tube 4. A connecting piece 5 is connected to the central supporting tube 4, by means of which connecting piece the central supporting tube 4 is connected to a telescopically adjustable adjusting tube 6 comprising mutually telescopic parts 6a, 6b and a locking knob 7. A cross piece 8 is attached to the upper part 6a of the telescopically adjustable adjusting tube 6, to which cross piece a second connecting piece 9 is attached. From said second connecting piece 9, an upright 10 for a support 11 for a screen 12 and the steering mechanism 23 extends. The connection between the second connecting piece 9 and the upright 10 has been strengthened by means of a stiffening plate 9a. Disposed between the rear leg 3 and the central supporting tube 4 is a supporting frame 13 comprising a supporting tube 14 that slopes down from the connecting piece 9, which supporting tube is connected to a seat 19 by means of connecting tubes 15 and stiffening plates 16, 17. A telescopic tube portion 14a is provided at the opposite end of the supporting queue 14, on which tube portion a footrest 24 is mounted, which is provided with pedals 25 of the control module and with a game console and a storage box. The central supporting tube 4 is further provided with a transverse connecting tube 20, which extends towards an opposite central supporting queue (not shown in figure 1). The seat 19 is supported on a pivotable, transversely extending connecting tube 21, which is connected to the supporting tube 14 via the stiffening plate 17. Knobs 27 and 29 function to adjust the telescopically interconnected tubes 28 and 30a, 35, respectively, with respect to each other. A knob 31 functions to release the sleeve 32 so as to make it possible to adjust the spacing between the seat part and the screen by moving the same over the support 11.

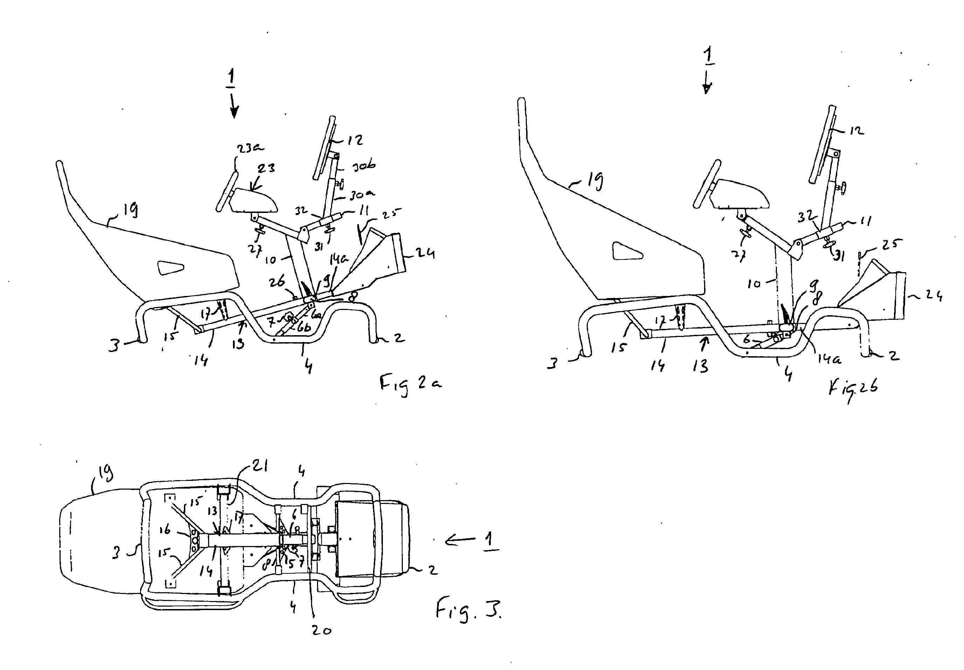

Figures 2a and 2b show the control device 1 of figure 1, with the legs 2, 3, the central supporting tube 4 and the telescopically adjustable adjusting tube 6, 6a, 6b provided with the locking knob 7, in the racing position and in the rally position, respectively. The connecting piece 9 is positioned on the cross piece 8, from where the upright 10 with the support 11 for the screen 12 and the screen 12 and the steering mechanism 23 with the steering wheel 23a extend. The figure only shows the supporting tube 14, a connecting tube 50 and the stiffening plate 17 of the supporting frame 13, with a seat 19 mounted between the latter two. Mounted on the opposite end of the supporting tube 14 is a footrest 24 provided with the pedals 25 as well as with a game console and a storage box. A knob 26 is provided for locking the tube portion 14a in position with respect to the supporting tube 14.

Figure 3 is a bottom view of the control device 1 of figure 1, showing the legs 2, 3 and the central supporting tube 4, between which a transverse connecting tube 20 extends. The telescopically adjustable adjusting tube 6 provided with the locking knob 7 is connected to a cross piece via the connecting piece 5. The figure clearly shows the supporting tube 14 of the supporting frame 13 and the connecting tubes 15, the stiffening plates 16, 17, which latter plate is connected to the pivotable, transverse connecting tube 21 that supports the horizontal support members 18 for a seat (not shown in figure 3).

Referring to figure 1, the control device 1 provided with the legs 2, 3 and the central supporting tubes 4 is supported on a supporting surface (not shown) in use. Furthermore, a transverse connecting tube 20 is provided, which extends between two central supporting tubes 4 disposed on either side thereof (see figure 3). These parts of the control device 1 are static relative to the supporting surface (not shown) on which the control device 1 is placed. The static part of the control device 1 is connected to an adjustable part of the control device 1 via a connecting piece 5. The adjustable part of the control device 1 can be adjusted by unlocking the telescopically adjustable adjusting tube 6, 6a, 6b by means of the locking knob 7, after which the upper part 6a of the telescopically adjustable adjusting tube 6 can be moved. When the upper part 6a of the telescopically adjustable adjusting tube 6 is moved upwards in the direction indicated by the arrow A, the connecting piece 5 will pivot in anti-clockwise direction about an imaginary horizontal axis P, whilst also the cross piece 8 will pivot in anti-clockwise direction about a second imaginary axis Q. Furthermore, the transverse connecting tube 21 will pivot in clockwise direction about the imaginary axis R of the pivotable transverse connecting tube 21. Said movement is possible because a beam that extends from the front to the rear within the seat 19 functions as a guide for a sleeve (not shown) extending from the front to the rear, to which the connecting tube 15 is attached. Simultaneously with these pivoting movements, the bottom side of the connecting piece 5 with the telescopically adjustable adjusting tube 6 and the cross piece 8, and thus also the supporting frame 13 with the supporting queue 14, the connecting tubes 15 and the stiffening plates 16, will be moved in rearward direction with respect to the control module and the steering wheel 23a. Subsequently the steering wheel can be readjusted by loosening the knob 27 and telescopically moving a connecting rod (not shown) for the steering mechanism 23 within the tube 28. Following that, the adjusted position is fixed by tightening the knob 27 again. The spacing between the seat 19 and the control pedals 25 can be adjusted in the same manner by means of the knob 26 and by moving the tube portion 14a telescopically within the supporting tube 14. Similarly, the position of the screen 12 can be adjusted by means of the knob 21 and the telescopic tubes 30a, 30b.

Figures 2a, 2b show the control device 1 of figure 1 in a so-called "racing position" and in a so-called "rally position", respectively. In figure 2a, the telescopically adjustable adjusting tube 6a is shown to have been moved out of the part 6b of the telescopically adjustable adjusting tube to a large extent, and a user will be accommodated in the seat 19 in a more or less reclined position, i.e. the racing position. In figure 2b, the upper part 6a of the telescopically adjustable adjusting tube is shown to have been moved (substantially) entirely into the lower part 6b of the telescopically adjustable adjusting tube. As the figure shows, the seat is oriented in a more vertical position in comparison with figure 2a, so that a user will take up a more upright position for playing a rally game.

It should be understood that the embodiment of the present invention as illustrated and described herein is only meant by way of illustration and does not in any way limit the scope of the present invention as defined in the appended claims. Thus, the control device is tiltable within the supporting frame of the control device in the embodiment as described and shown by way of example herein. It is also conceivable, however, that a seat is tiltably mounted to the control device so as to create a more reclined position. Furthermore it is conceivable that a frame consists of two parts, in which case a seat part of the frame need not by definition be connected to a part of the frame that is arranged for supporting the control means, such as the pedals and the screen. In addition, many alternatives are conceivable for adjusting the various adjustable parts. Thus it is possible to realise the tilting movement by different tilting means. Furthermore, the adjusting means and the locking have so far been discussed as separate elements herein. The locking means may be integrated in the adjusting means.

## Claims

1. A control device for a computer game, comprising at least one control module for controlling a computer simulation programme and a seat unit comprising a supporting frame and a seat part that can be positioned in such a manner with respect to said at least one control module that a user can sit down on the seat unit for operating said at least one control module from the seat unit, **characterised in that** the seat part of the seat unit can be fixed in at least two positions with respect to said at least one control module, wherein a first position enables the user to take up a more reclined position with respect to said at least one control module than in a second position different from said first position.

2. A control device according to claim 1, **characterised in that** a tilting mechanism is provided for tilting the seat part of the seat unit between said at least two positions.

3. A control device according to claim 2, **characterised in that** the seat part of the seat unit is connected to the supporting frame of the seat unit via the tilting mechanism.

4. A control device according to claim 2, **characterised in that** the tilting mechanism is provided on the frame for tilting a first frame part, which supports the seat part, with respect to a second frame part, which is supported on a supporting surface.

5. A control device according to any one or more of the preceding claims, **characterised in that** locking means are provided for locking the seat part in said at least two positions.

6. A control device according to any one or more of the preceding claims, **characterised in that** connecting means are provided for connecting the control module to the seat unit.

7. A control device according to any one or more of the preceding claims, **characterised in that** the control device comprises a screen for visualising the computer game.

8. A control device according to any one or more of the preceding claims, **characterised in that** the control device comprises at least one pedal and a steering wheel for simulating the driving of a vehicle.

9. A control device according to claim 8, **characterised in that** the computer simulation programme comprises software for simulating the driving of a car.

10. A control device according to claim 8 or 9, **characterised in that** the seat part comprises a so-called bucket seat, which can be placed at least in a so-called rally position and in a so-called race position.

11. A control device according to any one or more of the preceding claims, **characterised in that** a steering wheel which is adjustably connected to the supporting frame via adjusting means is provided.

12. A control device according to claim 11, **characterised in that** said adjusting means comprise a locking element for locking the steering-mechanism in a set position with respect to the seat unit.

13. A control device according to any one or more of the preceding claims, **characterised in that** said at least one control module comprises at least one foot pedal and that the spacing between the seat unit and said at least one foot pedal is adjustable.

14. A control device according to claim 13, **characterised in that** said at least one foot pedal is connected to the seat unit via the supporting frame, and **in that** an adjusting element and a locking element are provided for adjusting the spacing between said seat unit and said at least one foot pedal and locking said seat unit and said at least one foot pedal in the position as adjusted.

15. A control device according to any one or more of the preceding claims, **characterised in that** adjusting means and a locking element are provided for adjusting the position of the screen with respect to a user and locking the screen in the adjusted position.
